# FASCICULE DE BREVET EUROPEEN

(11) **EP 0 622 266 B1**
(45) Date de publication et mention de la délivrance du brevet: **12.02.1997**
(21) Numéro de dépôt: 94400826.7
(22) Date de dépôt: 15.04.1994
(51) Int. Cl.: B60N 2/00, B60N 2/06

(54) **Support de siège de véhicule automobile**
Sitzuntergestell für Kraftfahrzeuge
Seat support for automotive vehicles

(30) Priorité: 27.04.1993 FR 9304935
(43) Date de publication de la demande: 02.11.1994
(73) Titulaire: Société Anonyme dite: REGIE NATIONALE DES USINES RENAULT, 92109 Boulogne Billancourt (FR)
(72) Inventeur: Laporte, Alain, F-78280 Guyancourt (FR)
(74) Mandataire: Ernst-Schonberg, Michel

(56) Documents cités:
- EP-A- 0 143 678
- EP-A- 0 171 660
- EP-A- 0 283 356
- EP-A- 0 442 765
- EP-A- 0 500 412
- EP-A- 0 512 931
- FR-A- 2 500 383
- FR-A- 2 556 946
- GB-A- 2 008 938
- US-A- 3 915 493

## Description

L'invention concerne un support de siège de véhicule automobile constitué par un cadre porteur sur lequel des fourches avant et des fourches arrière sont agencées pour coopérer respectivement avec une tige de fixation solidaire du plancher du véhicule et dont chacune porte un verrou mobile pour bloquer ladite fourche avec la tige correspondante, et un moyen de manoeuvre du verrou pour amener ce dernier en position déverrouillée, de manière à permettre le dégagement des fourches par rapport aux tiges support.

La publication FR-A-2 556 946 (correspondant au préambule de la revendication indépendante) décrit un siège dans lequel les verrous sont portés par des pieds fixés à l'armature du siège et dans lequel des verrous sont sollicités en position de verrouillage par un moyen de rappel à l'encontre d'un effort de commande exercé par un palonnier.

L'invention part de l'idée de faciliter le réglage longitudinal du siège et l'interchangeabilité dudit siège sans modification préalable du support.

L'invention a donc pour objet un support de siège de véhicule automobile tel que décrit dans la revendication indépendante, sur lequel les fourches avant et les fourches arrière sont portées par deux rails de guidage inférieurs au contact de rails de guidage supérieurs mobiles, entretoisés par une base de retenue du siège.

Le support de siège ainsi réalisé peut être orienté indifféremment vers l'arrière ou suivant le sens d'avancement du véhicule et recevoir indifféremment un siège conventionnel, un siège de passager enfant ou un module de rangement fermé par un accoudoir.

D'autres caractéristiques et avantages de l'invention apparaîtront à la lecture de la description d'un exemple de réalisation du support en référence au dessin annexé dans lequel :
- la figure 1 est une représentation perspective du support de siège et de son agencement par rapport à un élément de plancher d'un véhicule automobile,
- la figure 2 est une représentation schématique du support représenté à la figure 1 et un ensemble d'équipements de montage.

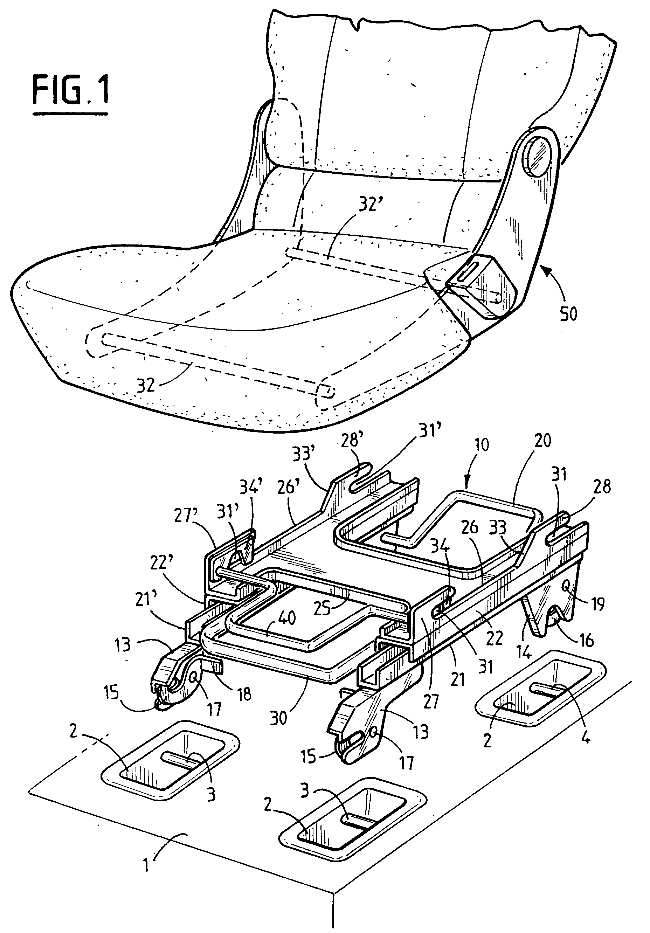

A la figure 1 on a représenté une portion de plancher 1 porteur d'alvéoles 2 de réception de tiges de fixation 3, 4 rigidement fixées au plancher. Deux tiges telles que 3 sont ainsi transversalement alignées et longitudinalement décalées par rapport à deux tiges 4 transversalement alignées.

L'écartement transversal des tiges 3 ou 4 et le décalage longitudinal de celles-ci est en correspondance avec ceux des fourches avant 13 et des fourches arrière 14 du support 10 d'un siège 50.

Chaque fourche avant 13 et chaque fourche arrière 14 porte un verrou.

Chaque verrou 15 des fourches avant 13 est monté à rotation autour d'un axe 17 transversalement aligné avec l'axe correspondant de l'autre verrou et possède une patte 18 d'actionnement manuel.

Les verrous 16 des fourches arrière 14 sont montés à rotation autour d'axes 19 transversalement alignés et son mécaniquement liés par un premier palonnier 20 d'accouplement et de manoeuvre. Le palonnier 20 amène ainsi simultanément les verrous 16 en position déverrouillée de manière à permettre le dégagement des fourches 14 par rapport aux tiges support 4.

Selon une caractéristique de l'invention, les fourches avant 13 et les fourches arrière 14 sont portées par les extrémités de deux rails de guidage inférieurs 21, 21' au contact de rails de guidage supérieurs 22, 22'.

Un deuxième palonnier 30 de manoeuvre, assure le déverrouillage des rails de guidage supérieurs 22, 22' par rapport aux rails correspondants inférieurs 21, 21' dans le but de réaliser un déplacement relatif des rails supérieurs 22, 22' par rapport aux rails inférieurs 21, 21' immobilisés par leurs fourches 13, 14 au contact des tiges 3, 4 portées par le plancher.

Selon une autre caractéristique de l'invention les rails supérieurs 22, 22' sont entretoisés par une base 25 de retenue du siège 50.

La base 25 rigidement reliée aux rails supérieurs 22, 22' est réalisée dans un flan de tôle découpé et plié et possède deux bords latéraux érigés 26, 26' qui portent des supports secondaires de fixation 27, 27' avant et des supports secondaires de fixation 28, 28' arrière intégrés auxdits bords.

Chaque support secondaire tel que 27, 27' et 28, 28' possède une encoche 31, 31' et les encoches 31, 31' sont transversalement alignées au niveau des supports 27, 27' et 28, 28'.

Les encoches 31, 31', transversalement alignées reçoivent dans ces conditions deux traverses de montage 32, 32' portées par le siège 50 et longitudinalement décalées.

Dans le but de favoriser le montage d'un siège 50, les supports secondaires 28, 28' transversalement alignés sont limités par une rampe de guidage 33, 33' orientée vers un verrou basculant 34, 34' de fermeture des encoches 31, 31' transversalement alignées portées par les supports secondaires 27, 27'.

Les verrous 34, 34' sont accouplés et manoeuvrés par un troisième palonnier 40.

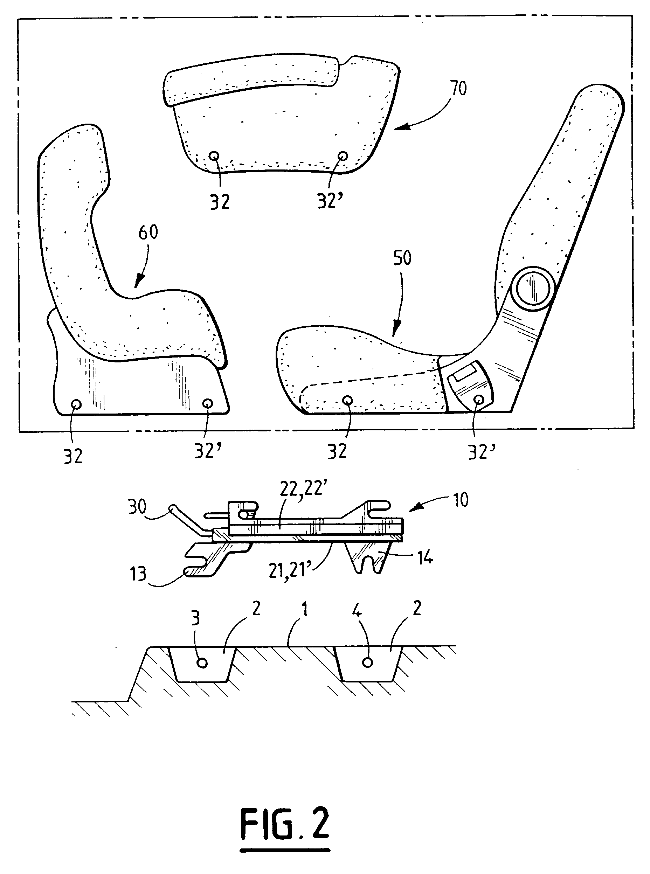

Ainsi que cela est montré à la figure 2, le siège 50 porte les traverses de montage 32, 32'. L'agencement identique des traverses 32, 32' est transposé au choix sur un siège 60 de passager enfant ou sur un module de rangement 70 dont le couvercle constitue un accoudoir.

Pour permettre les différents agencements de l'habitacle du véhicule, la disposition des traverses 32, 32' et des supports secondaires 27, 27' et 28, 28' autorise un changement d'orientation du siège 50, du siège 60 ou du module 70.

De manière analogue, la disposition des tiges de fixation 3, 4 et des fourches 13, 14 autorise un changement d'orientation du cadre support du siège.

## Revendications

1. Support de siège de véhicule automobile constitué par un cadre porteur sur lequel des fourches avant (13) et des fourches arrière (14) sont agencées pour coopérer respectivement avec une tige de fixation (3, 4) solidaire du plancher (11) du véhicule dont chacune porte un verrou (15, 16) mobile pour bloquer la fourche (13, 14) avec la tige correspondante, et un moyen de manoeuvre (18, 20) du verrou (15, 16) pour amener celui-ci en position déverrouillée, de manière à permettre le dégagement de la fourche (13, 14) par rapport à la tige support (3, 4), caractérisé par le fait que les fourches avant et arrière (13, 14) sont portées par deux rails de guidage inférieurs (21, 21') au contact de rails de guidage supérieurs (22, 22') entretoisés par une base (25) de retenue du siège qui possède deux bords latéraux érigés (26, 26'), des supports secondaires de fixation (27, 28 ; 28, 28') avant et arrière intégrés audits bords (26, 26'), des encoches (31, 31') portées par les dits supports secondaires et transversalement alignées et présentant une ouverture d'introduction de deux traverses (32, 32') longitudinalement décalées, respectivement portées par le siège.

2. Support selon la revendication 1, caractérisé par le fait que deux supports secondaires (28, 28') transversalement alignés sont limités par une rampe de guidage (33, 33') orientée vers un verrou basculant (34, 34') de fermeture des encoches (31, 31') transversalement alignées portées par les deux autres supports secondaires (27, 27').

3. Support selon l'ensemble des revendications 1 et 2, caractérisé par le fait qu'il porte un premier palonnier (20) d'accouplement et de manoeuvre de verrous (16) de blocage des fourches (14), un deuxième palonnier de manoeuvre et de déverrouillage (30) des rails de guidage supérieurs (22, 22') par rapport aux rails correspondants inférieurs (21, 21') et un troisième palonnier (40) d'accouplement et de manoeuvre des verrous (34, 34') de fermeture des encoches (31, 31') portées par les supports secondaires de fixation (27, 27') transversalement alignés.

## Claims

1. A motor vehicle seat support formed by a carrier frame on which front forks (13) and rear forks (14) are arranged to co-operate respectively with a fixing bar (3, 4) which is fixed with respect to the floor (11) of the vehicle, each thereof carrying a locking member (15, 16) which is movable to lock the fork (13, 14) to the corresponding bar, and a means (18, 20) for operating the locking member (15, 16) to move it into the unlocked position so as to permit disengagement of the fork (13, 14) with respect to the support bar (3, 4), characterised in that the front and rear forks (13, 14) are guided by two lower guide rails (21, 21') in contact with upper guide rails (22, 22') braced by a retaining base (25) of the seat which has two upstanding lateral edges (26, 26'), front and rear secondary fling supports (27, 28; 28, 28') integrated in said edges (26, 26'), and slots (31, 31') which are carried by said secondary supports and which are transversely aligned and which have an opening for introduction of two longitudinally displaced transverse members (32, 32') which are respectively carried by the seat.

2. A support according to claim 1 characterised in that two transversely aligned secondary supports (28, 28') are limited by a guide ramp (33, 33') which is oriented towards a pivoting locking member (34, 34') for closure of the transversely aligned slots (31, 31') carried by the other two secondary supports (27, 27').

3. A support according to both of clams 1 and 2 characterised in that it carries a first swing bar (20) for coupling and operating locking members (16) for locking the forks (14), a second swing bar (30) for operating and unlocking the upper guide rails (22, 22') with respect to the corresponding lower rails (21, 21'), and a third swing bar (40) for coupling and operating the locking members (3, 34') for closure of the slots (31, 31') carried by the transversely aligned secondary fixing supports (27, 27').

## Patentansprüche

1. Sitzuntergestell für Kraftfahrzeuge, bestehend aus einem Tragrahmen, auf dem vordere Gabeln (13) und hintere Gabeln (14) derart angeordnet sind, daß sie mit Tragbolzen (3 bzw. 4) zusammenwirken, die fest mit der Bodengruppe (1) des Fahrzeugs verbunden sind, wobei jede einen beweglichen Riegel (15, 16) trägt, um die Gabel (13, 14) am zugehörigen Tragbolzen zu verriegeln und einer Betätigungsanordnung (18, 20) für die Riegel (15, 16), um diese in die entriegelte Stellung derart zu überführen, daß die Gabeln (13, 14) bezüglich der Tragbolzen (3, 4) freigegeben werden, dadurch gekennzeichnet, daß die vorderen und hinteren Gabeln (13, 14) getragen werden von zwei unteren Führungsschienen (21, 21'), die in Eingriff mit oberen Führungsschienen (22, 22') stehen, die über eine Auflageplatte (25) für den Sitz miteinander verbunden sind, welche zwei nach oben gerichtete Seitenränder (26, 26') sowie sekundäre vordere und hintere in die Ränder (26, 26') integrierte Feststellhalterungen (27, 28) aufweist, wobei Aussparungen (31, 31') in den sekundären Halterungen vorgesehen sind, die in Querrichtung miteinander fluchtend ausgerichtet sind und die eine Einführöffnung für zwei vom Sitz getragene, in Längsrichtung versetzt zueinander angeordnete Streben (32, 32') aufweisen.

2. Sitzuntergestell nach Anspruch 1, dadurch gekennzeichnet, daß die sekundären Halterungen (28, 28'), die in Querrichtung miteinander fluchtend ausgerichtet sind, durch eine Führungsrampe (33, 33') begrenzt sind, welche zu einem Schwenkriegel (34, 34') zum Verschließen der in Querrichtung miteinander fluchtend ausgerichteten Aussparungen (31, 31') in den beiden anderen sekundären Halterungen (27, 27') ausgerichtet ist.

3. Sitzuntergestell nach den Ansprüchen 1 und 2, dadurch gekennzeichnet, daß es einen ersten Kupplungs- und Betätigungsbügel (20) für die Riegel (16) zur Verriegelung der Gabel (14), einen zweiten Bügel (30) zur Betätigung und zur Entriegelung der oberen Führungsschienen (22, 22') bezüglich der unteren Schienen (21, 21') und einen dritten Kupplungs- und Betätigungsbügel (40) aufweist für die Riegel (34, 34') zum Verschließen der Aussparungen (31, 31') in den sekundären in Querrichtung miteinander fluchtend ausgerichteten Feststellhalterungen (27, 27').
